# EUROPEAN PATENT SPECIFICATION

(11) **EP 0 331 064 B1**
(45) Date of publication and mention of the grant of the patent: **04.08.1993**
(21) Application number: 89103373.0
(22) Date of filing: 27.02.1989
(51) Int. Cl.: G21C 17/08, G21F 7/04, F21S 5/00

(54) **A ligthing device for illuminating closed environments**
Beleuchtungsvorrichtung zum Beleuchten von geschlossenen Räumen
Dispositif d'illumination pour illuminer des enceintes fermées

(30) Priority: 04.03.1988 LU 87151
(43) Date of publication of application: 06.09.1989
(73) Proprietor: EUROPEAN ATOMIC ENERGY COMMUNITY (EURATOM), L-2920 Luxembourg (LU)
(72) Inventor: Businaro, Tiziano Vinicio, I-00189 Roma (IT); Cusack, Rodney, Newbury Berks (GB); Dalle Carbonare, Guiliano, Didcot Oxon (GB); Hemmerich, Johann, Headington Oxford (GB); Raimondi, Tullio, Abingdon Oxon (GB)
(74) Representative: Weinmiller, Jürgen

(56) References cited:
- GB-A- 1 109 078
- US-A- 1 351 562
- US-A- 3 813 514

## Description

The invention relates to a lighting device as defined in the preamble of claim 1.

There are closed environments which need regular inspection, but which are exposed to harmful influences or have a contents or structure not allowing for the direct access by man and permitting only remotely operated inspection e.g. by TV cameras.

Hot cells in nuclear plants are good examples because of the radioactive and toxic materials tested therein and because of the high temperatures and the often sophisticated peripheral structures. Most delicate are those cases where the installation of remotely controlled inspection devices and lighting devices associated thereto within the environment is forbidden or extremely undesirable. Such a case is for instance the vacuum plasma chamber of a nuclear fusion test facility such as the circular vessel of a TOKAMAK, the internal geometry of which must not be altered by any stationary structures. The design of inspection and lighting devices for this type of application must take into account two specific requirements:
- the inspections should affect as little as possible the normal process operations in the environment, and
- the maintenance of the device and its components should be very simple and not time-consuming and should not require manipulations inside the environment.

For reasons of operation security, complicate movements of the device and its components as well as the use of sophisticated components and techniques should be avoided. These limitations should, however, not hamper the efficiency and flexibility of the lighting tasks, which may include spot lighting.

The present invention refers to a lighting device for the use in hostile, closed environments, which offers a reliable solution to said problems.

According to the invention, the lighting device for illuminating a closed environment comprising a light source and at least one glass rod which is optically and mechanically coupled thereto and extends through an enclosure wall, and which is provided with a light diffusor at its free end, is characterized in that the light source and at least one glass rod constitute a mobile unit, that at least one gastight window is interposed between the light source and the glass rod, that an access tube passing straight through the enclosure wall and opening into the environment receives and guides the mobile unit slidingly lodged therein, that at least one cylindrical bellow is coupled in a gastight manner to the access tube as well as to the rim of one of the windows, and that the bellow is dimensioned such as to allow the diffusor to penetrate into the environment and to be retracted therefrom.

Thus, the lighting device is located entirely outside the environment to be inspected, and the only movement executed with the device is a longitudinal displacement through the access tube over a relatively short distance. The components subject to maintenance and exposed to failure are accessible from outside the environment.

The invention will now be described with reference to the drawings.
Figure 1 is a simplified cut view of a first embodiment of the lighting device according to the invention, the light diffusor being retracted from the environment to be inspected.
Figure 2 is a view similar to figure 1, the light diffusor penetrating into the environment.
Figure 3 is a partial longitudinal cut view at an enlargened scale of the lighting device according to figure 1, with the light source and the glass rod being discoupled.
Figure 4 is a perspective view of a second embodiment of the invention in which several glass rods are provided.
Figure 5 is a perspective view of an alternative to the embodiment of figure 4.

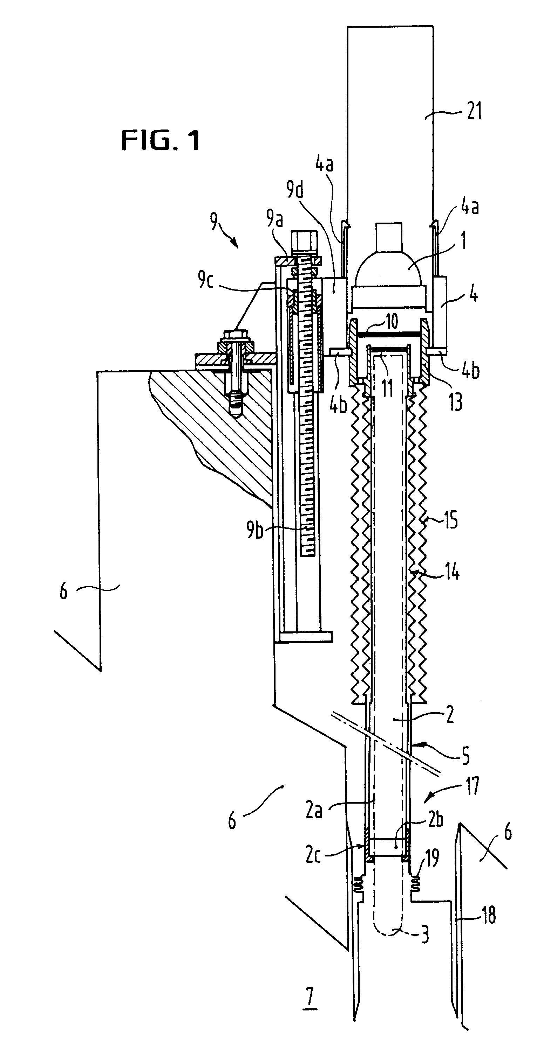

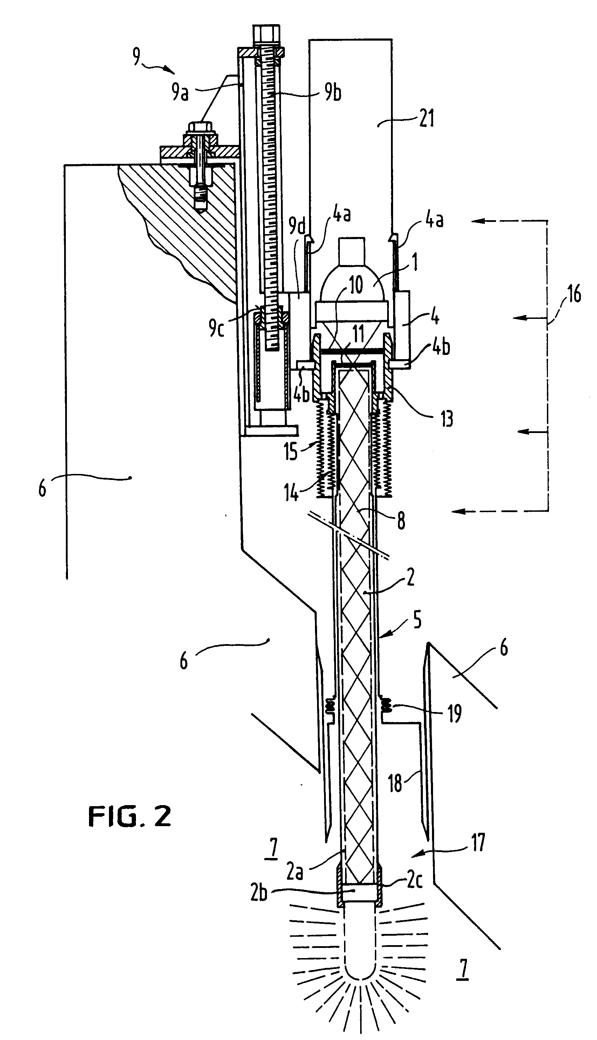

Referring to figures 1 and 2, the lighting device according to the invention comprises a light source 1, e.g. a commercial metal vapour arc lamp of some hundred Watts associated with a reflector and a vertical glass rod 2, surrounded by a metal cladding tube 2a. The rod has at its free end a roughened surface which acts as a diffuser 3 for projecting light into the environment 7. The light source and the glass rod (light guide) are rigidly coupled through a sleeve 4. The light source projects focussed light directly into the glass rod, the angle of the light cone being chosen such that a maximum amount of light is injected into the glass rod. The high efficiency of this coupling is also due to the high transparency of the used materials (sapphire glass window and high purity fused silica) and the narrow focussing point of the lamp light.

Two windows 10, 11 are interposed between the light source 1 and the glass rod 2 and constitute a gastight separation between the atmosphere in the environment 7 to be illuminated and the ambient atmosphere. The windows are mounted in a twin-tubular connection member 13 which is locked to the sleeve 4 and tightly connected at its lower rim to the cladding tube 2a. The lamp 1, the rod 2 with its cladding tube 2a and its windows 10 and 11 together with the connection member 13 and the coupling sleeve 4 constitute a rigid but mobile unit which is received by and guided in an access tube 5 passing straight through the enclosure wall 6 and ending in the environment 7 to be illuminated. The lower portion of the mobile unit including the glass rod in its cladding tube is slidingly lodged in the access tube 5. The cladding tube 2a of the glass rod abuts against a shoulder 2b of the rod and is provided with clamping fingers 2c gripping the glass rod below said shoulder. By releasing the fingers, it is possible to extract the glass rod from the cladding tube (and thus form the lighting system), especially for exchange or repair purposes.

The direction taken by the light emitted by the lamp 1 in the light guide 2 is visualized by the dotted lines 8 in figure 2. The light trapped in the guide is reflected internally at the wall of the glass rod and it leaves the rod through the diffusor 3. The entire surface of the rod end is roughened, so that the light is shed over 360°.

The displacement of the lighting device in the access tube 5, which is only longitudinal in both directions, is performed by the drive device 9. It comprises a stationary structure 9a, bolted to the enclosure wall 6 (upper part), a spindle shaft 9b rotated by a motor (not shown) and a nut 9c engaging the spindle and connected to a bracket 9d of the drive device. The bracket is hinged to the sleeve 4. The spindle shaft 9b is mounted in parallel to the axis of the lighting device.

In order to ensure the tightness of the environment 7 between the access tube 5 and the glass rod 2, the windows 10 and 11 are coupled via their twin-tubular connection member 13 by means of bellows 14 and 15 to the access tube 5. The provision of two windows and two bellows is made for safety reasons in order to maintain tightness if one window is broken or one bellow leaks.

The bellows are expanded when the lighting device is in its off-duty position (figure 1) and they are contracted when the device is in its operative position (figure 2). The length of the bellows in the expanded position, the penetration depth of the glass rod into the environment 7 to be illuminated and the travelling path of the nut 9c on the spindle shaft 9b are adjusted to each other and determine the course of the lighting device.

The access tube 5 is laid through a test channel 17 in the enclosure wall 6 and at its lower end, it is gastightly secured to this enclosure wall 6. As the diameter of the access tube is smaller than that of the test channel, an adapter sleeve 18 is provided for bridging the gap. The sleeve is connected with one end to the test channel 17 and with the other end to a short additional bellow 19, which in turn is connected to the access tube 5 in a gastight manner. This bellow is only provided for taking over slight movements of the access tube due for instance to thermal expansions or to manufacturing tolerances. The free space within the adapter sleeve can be used for mounting a flap valve (not shown) actuated by a weight for closing the opening of the access tube when the diffusor 3 is entirely retracted.

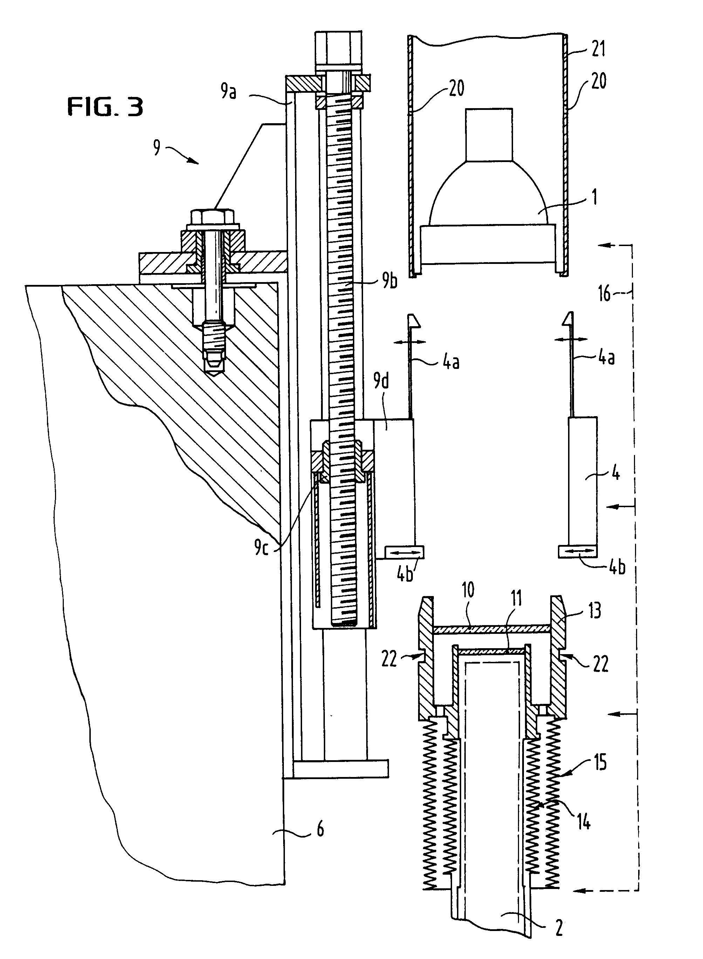

In figure 3, where the coupling area 16 is more clearly shown, two (out of four) recesses 20 in the housing 21 of the light source can be seen, which cooperate with snap fingers 4a attached to the coupling sleeve 4. Further, an annular groove 22 is provided on the outside of the connection member 13 and cooperates with pegs 4b supported by the coupling sleeve. In the coupled position, the pegs 4b are engaged in the annular groove 22 and the snap fingers 4a are engaged in the recesses 20. Discoupling of the snap fingers can be performed manually or by a matched tool, for example a sliding sleeve (not shown) movably put over the housing 21 in such a way that, when the sleeve is moved downward or upward, it pushes the elastic fingers 4a into the recesses or makes them come out. Thus, the lamp 1 can be made easily accessible and its housing can be retracted without affecting the glass rod 2 or the environment 7 to be illuminated.

As results from the above description, all parts of the lighting device which may cause trouble have been placed outside the environment 7; they are even disposed outside the enclosure wall 6. Maintenance, replacement and repair can thus be carried out without hindering the operations which are possibly being performed within the environment 7.

The diffusor according to figures 1 and 2 emits light over 360°. If spotlight is desired, only a part of the end portion of the glass rod is roughened, i.e. according to the desired direction of the light beam. In principle, also a rotation of the spotlight would be possible by rotating, for instance, the glass rod assembly. This, however, would imply that this assembly must be conceived in such a way that it can not only slide longitudinally, but can also rotate about its axis. This would complicate the guidance of the assembly in the access tube and increase the danger of movement hazards.

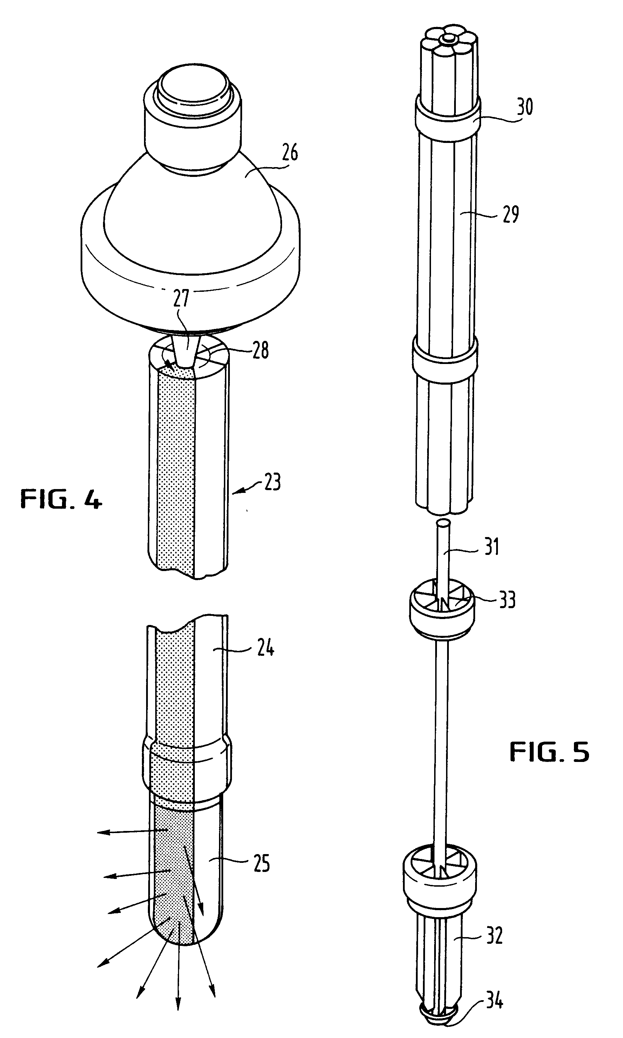

Another solution of the problem to change the direction of a light beam is given by the embodiment of figure 4, showing only the lamp and the glass rod. In this case, the sole glass rod according to figure 1 is replaced by a bundle 23 of partial rods 24, which receive individually light from the light source.

The bundle is composed of six partial rods each having its own diffusion window 25. The light source 26 projects its light cone 27 excentrically on the desired partial rod and the light can be injected into each selected partial rod either by rotatively moving the light source along a circular path, or by tilting the lamp in an inclined position around a tilt point located in the axis of the bundle, or by applying an asymmetrical optical deviator.

Figure 4 shows the general principle of such a composite light guide. One practical realisation thereof will now be described in accordance with figure 5. The rods 29 have prismatic cross-section together forming a "daisy" design. Rings 30 keep the rods in position with respect to the main axis and to the outer cladding (not shown). The rings 30 are supported by a metal skeleton comprising a shaft 31, ribs 32 and radial spacers 33 fastened to the rings. A cap 34 secures the rods against axial displacement.

The described lighting device is radiation-resistant up to 10 exp.8 rad, high temperature resistant up to 450°C, and it is vacuum proof.

If the glass rod were darkened after prolongated radiation emerging from the environment 7, the light passing through the rod would heat up the rod by energy absorption, which heat would in turn make disappear the darkening, so that finally no decrease of the efficiency of the lighting device would occur.

The invention is not restricted to the preferred embodiments described above. The lighting device may also, if necessary, be mounted in a horizontal or an inclined position. Instead of two windows and two bellows, only one window and one bellow may be provided.

## Claims

1. A lighting device for illuminating a closed environment (7), comprising a light source (1) and at least one glass rod (2) which is optically and mechanically coupled thereto and extends through an enclosure wall (6), and which is provided with a light diffusor (3) at its free end, characterized in that the light source (1) and at least one glass rod (2) constitute a mobile unit, that at least one gastight window (10, 11) is interposed between the light source (1) and the glass rod (2), that an access tube (5) passing straight through the enclosure wall (6) and opening into the environment (7), receives and guides the mobile unit (1, 2) slidingly lodged therein, that at least one cylindrical bellow (14, 15) is coupled in a gastight manner to the access tube (5) as well as to the rim of one of the windows (10, 11), and that the bellow is dimensioned such as to allow the diffusor (3) to penetrate into the environment (7) and to be retracted therefrom.

2. A lighting device according to claim 1, characterized in that a bundle of parallel glass rods (24, 29) forming a "split" light guide is provided in the mobile unit (26, 2), and that means are provided between the light source (26) and the at least one window (1) for focussing the light cone (27) upon any selected one of the rods.

3. A lighting device according to claim 2, characterized in that the glass rods (24, 29) are supported in a metal skeleton composed of a central shaft (31) with rings (30) attached thereto via radial spacers (33), which rings surround the rods.

4. A lighting device according to any one of the preceding claims, characterized in that two windows (10, 11) are provided through which light passes in series.

5. A lighting device according to claim 4, characterized in that each window (10, 11) is individually associated to a bellow (14, 15), thus ensuring tightness, even if leaks should occur through one bellow or one window.

## Patentansprüche

1. Einrichtung zur Beleuchtung geschlossener Räume (7), mit einer Lichtquelle (1) und mindestens einem Glasstab (2), der optisch und mechanisch an die Lichtquelle angeschlossen ist und sich durch eine Umschließungswand (6) erstreckt und an seinem freien Ende mit einem Lichtdiffusor (3) versehen ist, dadurch gekennzeichnet, daß die Lichtquelle (1) und mindestens ein Glasstab (2) eine bewegliche Einheit bilden, daß mindestens ein gasdichtes Fenster (10, 11) zwischen Lichtquelle (1) und Glasstab (2) eingefügt ist, daß ein Zugangsrohr (5), das geradlinig die Umschließungswand (6) durchdringt und in den genannten Raum (7) mündet, die in ihm gleitend gelagerte bewegliche Einheit (1, 2) aufnimmt und führt, daß mindestens ein zylindrischer Faltenbalg (14, 15) gasdicht mit dem Zugangsrohr (5) und dem Rand eines der Fenster (10, 11) verbunden ist und daß der Balg so bemessen ist, daß er dem Diffusor (3) das Eindringen in den Raum (7) und das Zurückziehen aus demselben ermöglicht.

2. Beleuchtungseinrichtung nach Anspruch 1, dadurch gekennzeichnet, daß ein Bündel paralleler Glasstäbe (24, 29), die einen gesplitteten Lichtleiter bilden, in der beweglichen Einheit (26, 2) angeordnet ist und daß Mittel zwischen der Lichtquelle (26) und dem mindestens einen Fenster (1) zum Fokussieren des Lichtkegels (27) auf einen beliebigen der Stäbe vorhanden sind.

3. Beleuchtungseinrichtung nach Anspruch 2, dadurch gekennzeichnet, daß die Glasstäbe (24, 29) von einem metallischen Gerüst getragen werden, das aus einem zentralen Schaft (31) mit daran durch radiale Abstandshalter (33) befestigten Ringen (30) besteht, die die Stäbe umgeben.

4. Beleuchtungseinrichtung nach einem beliebigen der vorhergehenden Ansprüche, dadurch gekennzeichnet, daß zwei Fenster (10, 11) vorgesehen sind, durch die nacheinander das Licht fällt.

5. Beleuchtungseinrichtung nach Anspruch 4, dadurch gekennzeichnet, daß jedes Fenster (10, 11) einzeln mit einem Faltenbalg (14, 15) verbunden ist, so daß die Dichtheit auch dann gewährleistet ist, wenn bei einem einzelnen Balg oder einem einzelnen Fenster ein Leck auftreten sollte.

## Revendications

1. Dispositif d'éclairage destiné à l'illumination d'une enceinte (7) close, comprenant une source de lumière (1) et au moins une barre en verre (2), qui est accouplée optiquement et mécaniquement à ladite source en s'étendant à travers une paroi (6) de l'enceinte et en étant pourvu d'un diffuseur de lumière (3) à son extrémité libre, est caractérisé en ce que la source de lumière (1) et au moins une barre en verre (2) constituent une unité mobile, qu'au moins une fenêtre (10, 11) étanche au gaz est interposée entre la source de lumière (1) et la barre en verre (2), qu'un tube d'accès passant à travers la paroi (6) et débouchant dans ladite enceinte (7) reçoit ladite unité mobile (1, 2) qui est logée de façon coulissante dans ce tube, qu'au moins un soufflet cylindrique (14, 15) est fixé de façon étanche audit tube d'accès (5) ainsi qu'au bord d'une des fenêtres (10, 11), et que le soufflet est dimensionné de façon à permettre au diffuseur (3) de pénétrer dans ladite enceinte (7) et d'en être retiré.

2. Dispositif d'éclairage selon la revendication 1, caractérisé en ce qu'un faisceau de barres de verre (24, 29) parallèles entre elles formant un guide de lumière fendue est disposé dans l'unité mobile (26, 2), et que des moyens sont disposés entre la source de lumière (26) et ladite au moins une fenêtre pour focaliser le cône de lumière (27) sur une quelconque desdites barres.

3. Dispositif d'éclairage selon la revendication 2, caractérisé en ce que les barres de verre (24, 29) sont maintenues dans une structure métallique composée d'une tige centrale (31) pourvue d'anneaux (30) attachés à celle-ci par des écarteurs radiaux (33), lesdits anneaux entourant lesdites barres.

4. Dispositif d'éclairage suivant l'une quelconque des revendications précédentes, caractérisé en ce que deux fenêtres (10, 11) sont prévues, à travers lesquelles passe la lumière successivement.

5. Dispositif d'éclairage selon la revendication 4, caractérisé en ce que chaque fenêtre (10, 11) est individuellement associée à un soufflet (14, 15), en assurant ainsi l'étanchéité, même dans le cas où des fuites se produisent à travers un soufflet ou une fenêtre.
